# FASCICULE DE BREVET EUROPEEN

(11) **EP 3 077 152 B1**
(45) Date de publication et mention de la délivrance du brevet: **09.08.2017**
(21) Numéro de dépôt: 14821762.3
(22) Date de dépôt: 01.12.2014
(51) Int. Cl.: B23K 37/04, B62D 65/02

(54) **POSTE D'ASSEMBLAGE D'UN PAVILLON EN HAUT D'UNE CAISSE DE VEHICULE AUTOMOBILE, PROCEDE METTANT EN OEUVRE UN TEL POSTE D'ASSEMBLAGE**
FLIESSBANDSTATION EINER DACHPLATTE AUF EINER FAHRZEUGKAROSSERIE, VERFAHREN ZUR DURCHFÜHRUNG EINER SOLCHEN FLIESSBANDSTATION.
ASSEMBLY STATION OF A ROOF PANEL ON A VEHICLE BODY, METHOD USING SUCH ASSEMBLY STATION.

(30) Priorité: 05.12.2013 FR 1362143
(43) Date de publication de la demande: 12.10.2016
(73) Titulaire: Peugeot Citroën Automobiles SA, 78140 Vélizy Villacoublay (FR)
(72) Inventeur: PONCELET, Frederic, F-70400 Verlans (FR); EPERT, Didier, F-22190 Plerin (FR); MORISSET, Philippe, F-35740 Pace (FR)
(74) Mandataire: Fosse, Danièle
(86) Numéro de dépôt international: PCT/FR2014/053095
(87) Numéro de publication internationale: WO 2015/082816

(56) Documents cités:
- EP-A1- 0 927 598
- EP-A1- 2 554 459
- WO-A1-03/039941
- WO-A1-2009/057337
- WO-A1-2009/131293

## Description

La présente invention est relative à un poste d'assemblage d'un pavillon en haut d'une caisse de véhicule automobile et à un procédé mettant en oeuvre un tel poste d'assemblage.

Un tel poste d'assemblage sert à la mise en oeuvre d'opérations de soudage telles décrites dans le document WO2010106263 relatif à du soudage laser de pavillon. Le document EP 2 554 459 A1 divulgue un poste d'assemblage dédié au montage d'un pavillon (figure 1) en haut d'une caisse de véhicule automobile comportant deux côtés de caisse pourvus de brancards supérieurs reliés par au moins une traverse arrière, ledit poste s'assemblage comportant une table de positionnement de pavillon de manière que le pavillon soit disponible pour être manipulé via un système de mise en place du pavillon relativement aux brancards et à la traverse, en assurant la pose du pavillon sur la caisse et la conformation de l'arrière du pavillon, la table étant à proximité d'une station de soudage électrique par points et ledit système étant associé à un robot de manipulation pour que ce système puisse venir prélever ledit pavillon sur la table et que le pavillon soit amené via le robot de manipulation à ladite station qui d'une part est pourvue d'un robot de brasage et qui d'autre part, sur une ligne de transport de caisse est en amont d'une cabine de soudage des bords latéraux du pavillon aux brancards.

EP 2 554 459 A1 divulgue en outre un procédé d'assemblage d'un pavillon utilisant ledit poste d'assemblage.

La présente invention a notamment pour but d'améliorer des solutions existantes. L'invention vise par exemple à permettre une bonne qualité de pose de pavillon pour son soudage également de bonne qualité.

A cet effet, l'invention a pour objet un poste d'assemblage suivant la revendication 1 et dédié au montage d'un pavillon en haut d'une caisse de véhicule automobile comportant deux côtés de caisse pourvus de brancards supérieurs reliés par au moins une traverse arrière, le poste d'assemblage comportant une table de positionnement de pavillon de manière que le pavillon soit disponible pour être manipulé via un système de mise en place du pavillon relativement aux brancards et à la traverse, en assurant la pose du pavillon sur la caisse et la conformation de l'arrière du pavillon. La table est à proximité d'une station de soudage électrique par points et ledit système est associé à un robot de manipulation pour que ce système puisse venir prélever ledit pavillon sur la table et que le pavillon soit amené via le robot de manipulation à ladite station qui d'une part est pourvue d'un robot de soudures par points dédié au moins au soudage de l'arrière du pavillon sur la traverse arrière et qui d'autre part, sur une ligne de transport de la caisse, est en amont d'une cabine de soudage laser de bords latéraux du pavillon aux brancards.

Dans divers modes de réalisation du poste d'assemblage selon l'invention, on peut éventuellement avoir recours en outre à l'une et/ou à l'autre des dispositions suivantes :
- le robot de soudures par points est dédié aussi au soudage de l'avant du pavillon sur une traverse avant reliant, comme la traverse arrière, les brancards supérieurs de la caisse ;
- le système de mise en place du pavillon comprend un dispositif de conformation de l'arrière du pavillon pour le plaquer sur la traverse arrière en vue de l'assemblage par soudage de l'arrière du pavillon sur la traverse arrière ;
- le dispositif de conformation de l'arrière du pavillon comprend un ensemble de conformation qui pivote entre une position inactive et une position active à laquelle il est prévu que l'arrière du pavillon soit plaqué sur la traverse arrière ;
- des conteneurs sont prévus pour l'approvisionnement de la table de manière à mettre à disposition des pavillons tôlés et des pavillons vitrés, un robot de chargement étant situé entre ces conteneurs et cette table ;
- la table de positionnement pour le pavillon comporte un châssis globalement suivant un plan incliné et comprenant des organes de glissement du pavillon de manière que le pavillon se cale par gravité en glissant jusqu'à venir en butée sur des organes de butée de la table, ces organes de butée étant configurés pour recevoir en appui deux lisières adjacentes du pavillon ;
- la table a son pourtour qui est dégagé pour permettre un accès aisé lors de la préhension du pavillon via le système de mise en place du pavillon, le pourtour de la table ayant des segments passant par les organes de butée qui sont localisés ;
- la table a ses organes de butée qui sont dressés localement par rapport au plan incliné et comprennent d'une part des organes de butée inférieure déterminant une ligne basse d'appui à une extrémité transversale basse de la table et d'autre part des organes de butée latérale déterminant une ligne latérale d'appui à une extrémité longitudinale basse de la table.

Par ailleurs, l'invention a également pour objet un procédé d'assemblage d'un pavillon suivant la revendication 7, sur le haut d'une caisse de véhicule automobile, mis en oeuvre dans un poste d'assemblage conforme à l'invention. Le procédé comprend ;
- une étape pendant laquelle le pavillon à assembler sur la caisse est déchargé sur la table de positionnement ;
- une étape de mise en place du pavillon sur la caisse pendant laquelle agit le robot de manipulation associé au système de mise en place du pavillon en assurant sa pose sur la caisse et la conformation de l'arrière du pavillon ;
- une étape de soudage électrique par points de l'arrière du pavillon à sa traverse arrière du haut de la caisse est effectuée par le robot de soudures par points puis intervient un dégagement dudit système relativement à la caisse équipée de son pavillon ;
- une étape déplacement de la caisse sur la ligne de transport, en transférant la caisse pourvue de son pavillon depuis la station de soudage électrique par points jusque dans la cabine de soudage laser ;
- une étape de soudage longitudinal du pavillon, par soudage laser des bords latéraux du pavillon sur les brancards du haut de côté de caisse.

Dans divers modes de réalisation du procédé selon l'invention, on peut éventuellement avoir recours en outre à l'une et/ou à l'autre des dispositions suivantes :
- l'étape de soudage électrique par points de l'arrière du pavillon est complétée par le soudage électrique par points de l'avant du pavillon à la traverse avant du haut de la caisse ;
- dans lequel la conformation de l'arrière du pavillon comprend la déformation à plaquage de l'arrière du pavillon sur la traverse arrière en incluant, dans le système de mise en place du pavillon, le pivotement vers le bas du dispositif de conformation de l'arrière du pavillon en passant de sa position inactive à sa position active ;
- une étape pendant laquelle le pavillon déchargé sur la table glisse sur les organes de glissement à plat puis vient s'arrêter contre les organes de butée, le pavillon étant alors pré-positionné à la fin du glissement ;
- pendant l'étape de mise en place du pavillon, le robot de manipulation fait venir le système en approche du pavillon pré-positionné sur la table, le système déplacé par ledit robot vient prendre le pavillon puis vient poser le pavillon sur le haut de la caisse avec centrage automatique latéralement et positionnement longitudinal respectivement par rapport aux brancards de haut de côté de caisse et par rapport à la traverse arrière du haut de la caisse.

D'autres buts, caractéristiques et avantages de l'invention apparaîtront au cours de la description suivante d'un de ses modes de réalisation, donné à titre d'exemple non limitatif, en regard des dessins joints dans lesquels :
- la figure 1 montre un poste selon l'invention de chaîne d'assemblage d'éléments de la caisse d'un véhicule, comprenant un système de mise en place de pavillon pour sa pose et sa conformation ;
- la figure 2 est une vue de principe de type en section montrant partiellement le système de mise en place du pavillon ainsi qu'un pavillon en cours de montage sur deux brancards supérieurs de côtés de caisse de véhicule ;
- la figure 3 est une vue de principe de type en section montrant partiellement le pavillon monté sur les deux brancards supérieurs de côtés de caisse de véhicule ;
- la figure 4 est une vue en perspective de trois quarts arrière et de dessus, montrant en éclaté le pavillon, le haut des deux côtés de caisse de véhicule et la traverse arrière de la caisse ;
- la figure 5 est une vue en perspective de trois quarts arrière et de dessus, montrant le pavillon porté par ledit système, à l'accostage avec les deux côtés de caisse de véhicule et la traverse arrière de la caisse ;
- la figure 6 est une vue montrant le pavillon de dessous, tel que supporté par ledit système de mise en place de pavillon ;
- la figure 7 est une vue en perspective de trois quarts arrière et de dessus, montrant des détails dudit système ;
- la figure 8 est une vue de principe de type en section montrant partiellement suivant une section transversale et longitudinale le pavillon accosté sur la traverse supérieure arrière de la caisse et sur l'un des deux brancards supérieurs de côtés de caisse ;
- la figure 9A est une vue en perspective de trois quarts arrière et de dessus, montrant des détails du système de mise en place de pavillon et du pavillon de véhicule, tel qu'en action pour le soudage du pavillon à la traverse supérieure arrière de la caisse ;
- la figure 9B est une vue de principe de type en section montrant partiellement, suivant une section transversale et longitudinale, le pavillon plaqué à déformation sur la traverse supérieure arrière de la caisse et sur l'un des deux brancards supérieurs de côtés de caisse, en relation avec des repères indiqué à la figure 9A ;
- la figure 10 est une vue montrant de dessous le système de mise en place de pavillon ;
- la figure 11 est une vue montrant en perspective, de dessous et de l'arrière, des détails du système de mise en place de pavillon ;
- la figure 12 est une vue montrant schématiquement en perspective, de dessus et de l'arrière une table selon l'invention pour le positionnement d'un pavillon dans le poste d'assemblage ;

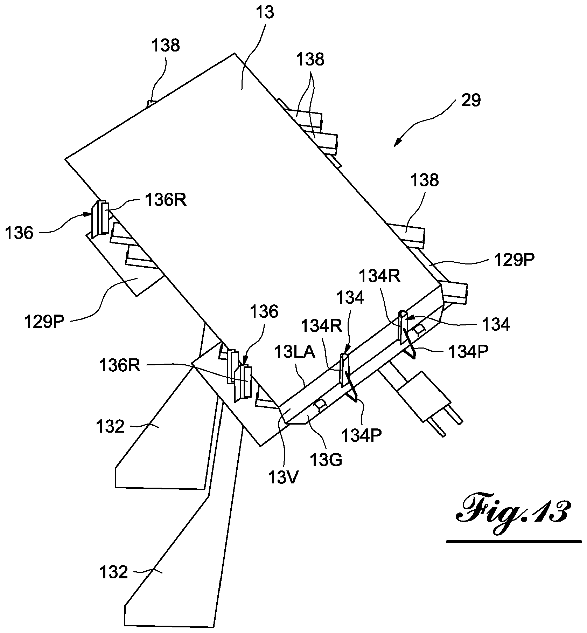

- la figure 13 est une vue montrant schématiquement en perspective, de dessus et de l'arrière la table de positionnement selon l'invention supportant un pavillon dans le poste d'assemblage ;
- la figure 14 est une vue conforme à la figure 13, montrant schématiquement un détail de la table de positionnement selon l'invention, à savoir des butées latérales de pavillon ;
- la figure 15 est une vue montrant le pavillon sensiblement à plat, en schématisant les emplacements de soudure du pavillon sur les traverses correspondantes de la caisse du véhicule.

En se reportant aux figures, la référence 10 désigne un poste d'assemblage de pavillon dans une chaîne d'assemblage d'éléments de la caisse 11 d'un véhicule, en particulier pour l'assemblage d'un haut de la caisse d'un véhicule. Ce poste 10 est dédié à l'assemblage d'un pavillon 13 au reste de la caisse 11 du véhicule, en incluant des opérations de soudage.

Sur les différentes figures, les mêmes références désignent des éléments identiques ou similaires. Dans la description qui va suivre, la direction désignée comme longitudinale correspond à l'axe d'avancement d'un véhicule qui sert ici de référentiel. Cet axe correspond à une direction considérée également pour le système selon l'invention qui est pris en considération comme quand il est positionné au-dessus de la caisse de véhicule. Les notions de direction horizontale et de direction verticale sont utilisées ici dans le but de simplifier la compréhension de la description et ne doivent pas être perçues comme des limitations notamment quant à l'orientation du système de mise en place de pavillon qui se déplace dans le poste d'assemblage.

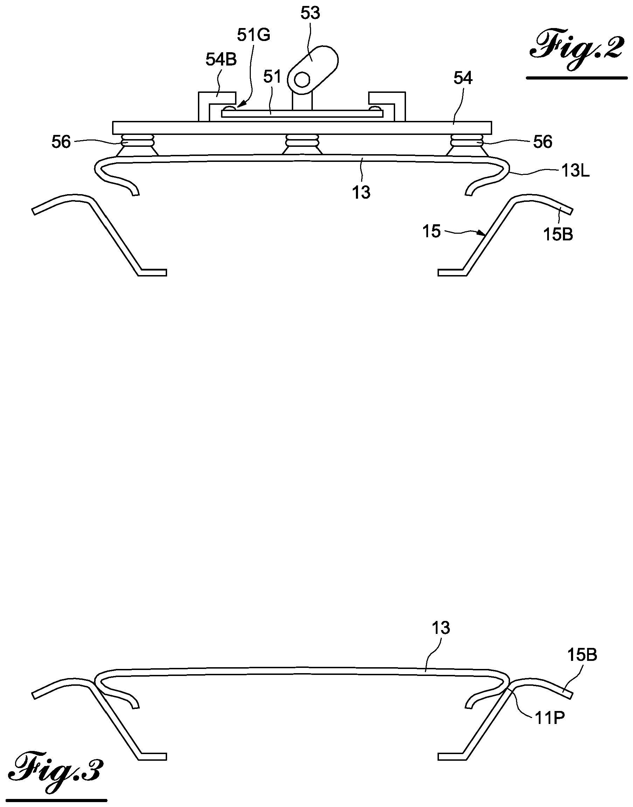

La caisse 11 comprend, de manière classique, deux côtés de caisse 15 dont le haut est pourvu d'une part de brancards supérieurs 15B, sur lesquels les bords latéraux 13L du pavillon 13 reposent longitudinalement et d'autre part une traverse supérieure arrière 17 sur laquelle repose transversalement l'arrière du pavillon. Les brancards peuvent être qualifiés d'arches supérieures des côtés de caisse. La figure 2, la figure 3 et la figure 4 montrent bien ces éléments de la caisse. Le pavillon a classiquement son extrémité avant qui repose transversalement sur la caisse, à savoir sur une traverse supérieure avant qui n'est pas représentée dans le cadre de la présente description.

Le pavillon 13 comprend, à l'extrémité arrière de son panneau principal sensiblement horizontal 13H, d'une part un rebord transversal sensiblement vertical 13V qui est directement raccordé au panneau principal en s'étendant vers le bas et d'autre part une goulotte arrière 13G qui s'étend sensiblement horizontalement en étant raccordée à l'arrière et en bas dudit rebord vertical. La goulotte 13G constituant un bord horizontal du pavillon comporte deux bossages 13B qui sont à proximité des extrémités latérales du pavillon pour constituer des parties rigides de fixation de charnière d'un ouvrant arrière de type hayon d'accès à un compartiment à bagages du véhicule.

En correspondance de l'arrière du pavillon, la traverse supérieure arrière 17 comprend un pan horizontal antérieur 17H, un pan intermédiaire vertical 17V et un pan horizontal postérieur 17P. Le pan horizontal postérieur 17P comprend deux bossages de piètements de charnière 17B, pour correspondre avec les bossages 13B de fixation de charnière aménagés dans ladite goulotte du pavillon. Ces pans de la traverse supérieure arrière 17 correspondent avec l'arrière du panneau principal, avec le rebord transversal vertical et avec la goulotte arrière du pavillon quand le véhicule est assemblé. La technologie utilisée pour cet assemblage est celle du soudage électrique par des points de soudure.

Le pavillon 13 et les côtés de caisse 15 sont en contact selon sensiblement une ligne de contact 11P située à la jonction d'un pan incliné longitudinal et d'une bordure longitudinale bombée qui sont respectivement sur chacun des brancards et sur chacun bords latéraux du pavillon (figure 3). La ligne de contact 11 P est utilisée pour le soudage longitudinal du pavillon 13 et des brancards supérieurs 15B par des robots 31 assurant des opérations de brasage par énergie laser. Ces robots 31 sont installés dans une cabine 33 appelée « cabine laser » appartenant au poste de 10 de la chaîne d'assemblage de la caisse du véhicule. Ce brasage laser constitue la dernière étape d'assemblage effectué sur le poste d'assemblage de pavillon tel que considéré dans la présente description.

Le poste 10 d'assemblage de pavillon comprend une ligne 21 de transport longitudinal des caisses de véhicule à assembler depuis des postes amont vers des postes aval de la chaîne d'assemblage, la cabine laser 33 étant, sur la ligne de transport 21, du côté de la sortie du poste d'assemblage de pavillon considéré dans la présente description. Le poste 10 d'assemblage de pavillon comprend, du côté entrée sur la ligne de transport 21, un système 23 de mise en place pour la pose et la conformation de pavillon. Ce système 23 est agencé pour permettre en premières opérations le positionnement avec centrage latéral automatique du pavillon 13 relativement aux brancards 15B du haut des côtés de caisse.

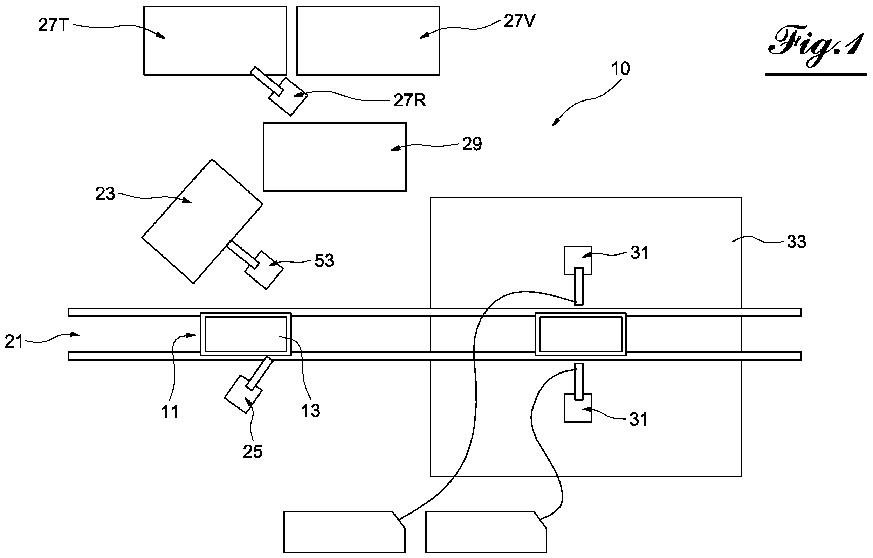

Également à l'entrée du poste 10 d'assemblage de pavillon, linéairement au niveau du système 23 de mise en place de pavillon, un robot de soudures par points 25 qui assure le soudage par points de l'avant et de l'arrière du pavillon relativement à la traverse avant et à la traverse arrière 17 reliant le haut des côtés de caisse. Dans l'exemple représenté, tel que montré à la figure 1, le robot de soudures par points 25 est à droite de la ligne de transport 21 et le système de mise en place de pavillon 23 est à gauche de cette ligne de transport. Par ailleurs, latéralement au système 23 conforme à l'invention, le poste 10 d'assemblage de pavillon comprend un conteneur 27T de pavillons tôlés et un conteneur 27V de pavillons vitrés qui sont à proximité d'une table 29 de positionnement de pavillon. Un robot 27R de chargement de pavillon sur la table est situé entre les conteneurs et la table.

De manière générale, le système 23 de mise en place de pavillon servant pour la pose et la conformation du pavillon comprend une structure supérieure 51 directement supportée par un robot 53 permettant d'aller chercher un pavillon 13 depuis la table 29 de positionnement de pavillon vers la caisse 11 du véhicule en attente de son pavillon en étant à proximité du robot de soudures par points 25, en station sur la ligne de transport.

Le système 23 sert d'outil de support de pavillon pour son positionnement entre les côtés de caisse 15 puis son assemblage par soudure électrique par points aux traverses. A cet effet, le système 23 de mise en place de pavillon comprend un bâti inférieur 54 à positionnement ajustable relativement à la structure supérieure 51, en étant directement supporté par cette structure. Par ailleurs, le bâti inférieur 54 est associé à un dispositif 50 de conformation de l'arrière du pavillon 13 pour le plaquer sur la traverse arrière 17 en vue de son assemblage par soudage par points assuré par le robot 25 de soudures par points. Des ventouses 56 d'accroche avec suspension du pavillon sont pourvues en dessous du bâti inférieur.

La structure supérieure 51 et le bâti inférieur 54 sont conformés sensiblement en échelle avec des poutres longitudinales et des poutres transversales. Des dispositifs de liaison 51 G autorisant un glissement limité via des billes sont interposés entre la structure supérieure 51 et le bâti inférieur 54. Les extrémités latérales d'une poutre transversale arrière de la structure supérieure 51 sont pourvues de plaques latérales de liaison 51 P qui sont solidaires d'organes fixes appartenant aux dispositifs de liaison 51 G. Des poutrelles longitudinales arrière 54P appartenant au bâti inférieur 54 sont reliées à des bras de liaison 54B qui ont des tronçons en porte à faux au-dessus des plaques latérales de liaison 51 P et qui sont solidaires d'organes mobiles appartenant aux dispositifs de liaison 51 G. En variante non représentée, tout autre dispositif équivalent peut être envisagé pour la liaison avec glissement limité entre la structure supérieure 51 et le bâti inférieur 54 dans le système 23 de mise en place de pavillon.

Les poutrelles longitudinales arrière 54P supportent des arches arrière d'appui 54C dont des tampons inférieurs 58 aux extrémités des jambes des arches sont au contact de la face supérieure du pavillon, à ses limites latérales. Ces arches 54C servent, avec les ventouses 56, à la manipulation du pavillon 13 en maîtrisant les déformations de ce dernier, par exemple pour éviter que le pavillon se vrille. A l'avant du bâti inférieur 54, des dispositifs similaires d'appui sont présents, des variantes équivalentes pouvant être considérées pour correspondre avec le pavillon. Des jambes 54J peuvent par exemple remplacer les arches. D'autres tampons 58 sont aussi prévus vers l'avant et à mi-longueur de pavillon.

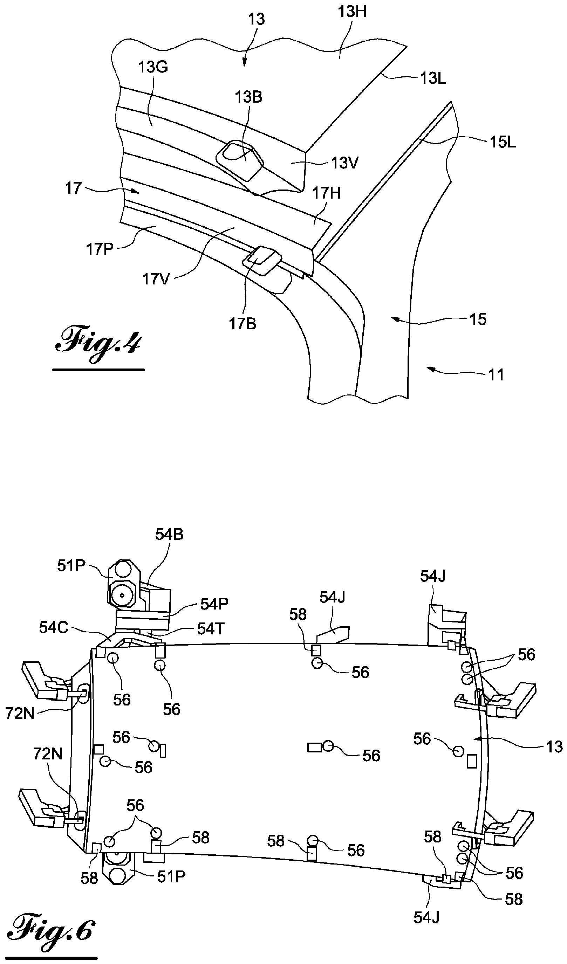

Les ventouses 56, comme représenté par exemple à la figure 6, sont par exemple au nombre de treize. Sept ventouses sont par exemple à l'arrière du pavillon, par exemple quatre latérales et trois centrales sur les 30 cm arrière du pavillon. Quatre ventouses sont par exemple réparties sur les côtés à l'avant du pavillon. Trois autres ventouses peuvent être par exemple situées au tiers avant du pavillon en étant réparties transversalement à ce niveau de longueur du pavillon.

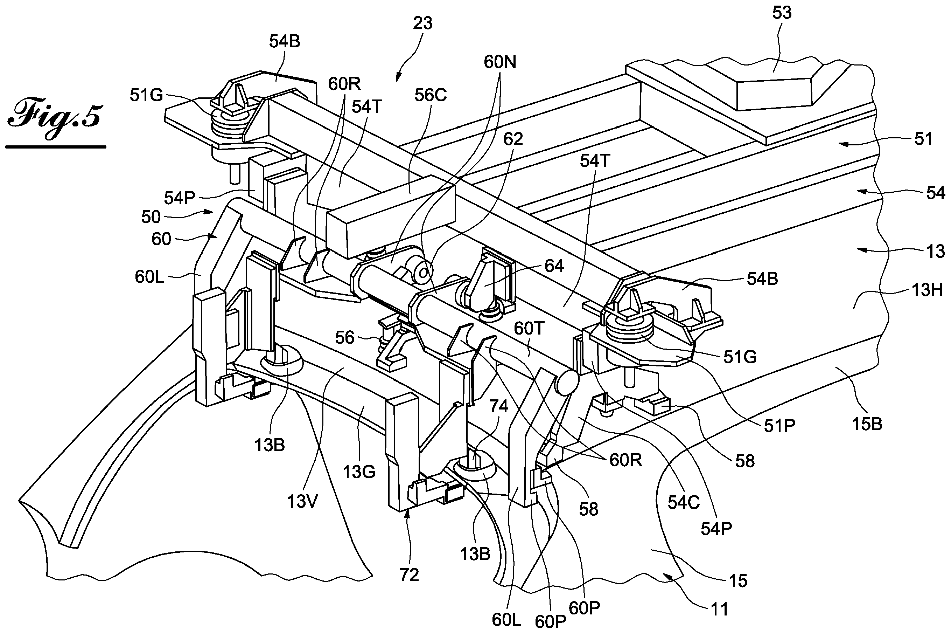

Pour que les ventouses 56 soient correctement disposées dans le cas d'un pavillon vitré, les ventouses sont préférentiellement en correspondance des parties tôlées du pavillon, autour de la vitre de ce dernier. Des dispositifs 56C de commande et se support des ventouses sont portés par le bâti inférieur, l'un de ces dispositifs 56C étant par exemple représenté à la figure 5 à laquelle on voit que ce dispositif au-dessus du dispositif 50 de conformation de l'arrière du pavillon.

Dans le bâti inférieur 54, c'est une poutre transversale arrière 54T qui est associée au dispositif 50 de conformation de l'arrière du pavillon 13. Cette poutre 54T supporte à pivotement suivant un axe horizontal un ensemble de conformation comprenant une fourche 60 qui pivote entre une position inactive et une position active. Quand la fourche 60 est à sa position active, le dispositif 50 de conformation de l'arrière du pavillon 13 plaque l'arrière du pavillon 13 sur la traverse arrière 17 en vue de son assemblage par soudage par points. La fourche 60 comporte un tube principal 60T qui s'étend transversalement en étant parallèle à la poutre transversale arrière 54T du bâti inférieur, tout en étant sensiblement grand comme cette poutre.

La fourche 60 comporte à proximité du milieu de son tube principal 60T deux troncs de pivotement 60N qui s'étendent radialement vers l'avant en comprenant à leur extrémité avant leur palier 62 de pivotement. En correspondance, la poutre transversale arrière 54T supporte deux socles 64 qui portent les axes de pivotement de la fourche (figure 5). La fourche 60 comprend à chacune des extrémités du tube principal 60T un levier d'appui 60L qui présente des tampons d'appui 60P pour appuyer sur le rebord transversal vertical 13V et sur la goulotte13G du pavillon pour le plaquage de l'arrière de ce dernier sur la traverse supérieure arrière 17 de la caisse du véhicule, à la position active de la fourche.

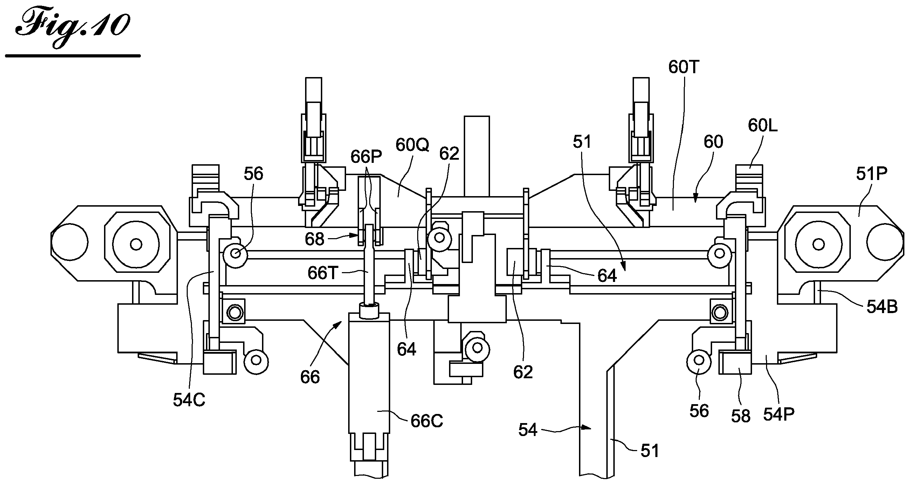

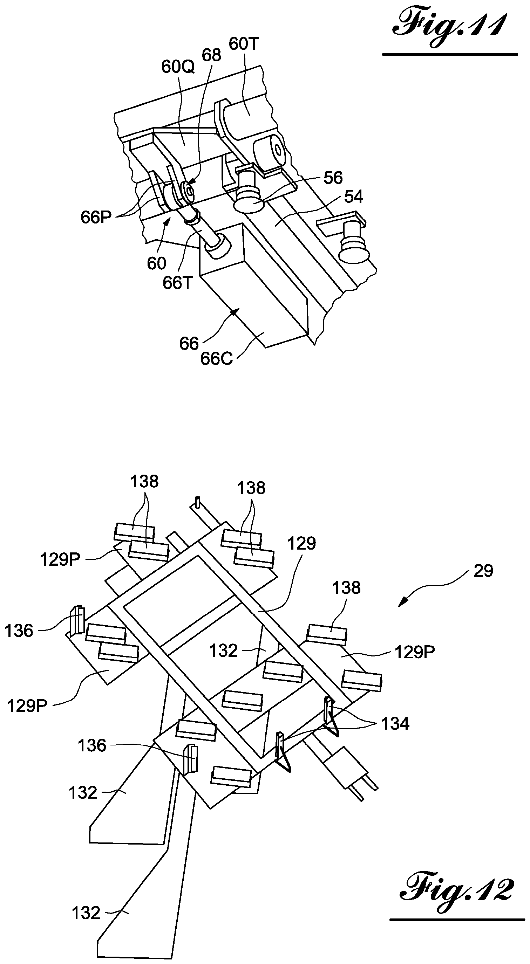

Le pivotement de la fourche 60 en montant ou en descendant entre sa position inactive et sa position active est actionné par un dispositif d'actionnement 66 comprenant un vérin qui est sous le bâti inférieur 54 et sous la fourche 60, comme le montre en particulier la figure 10 et comme le détaille la figure 11. Le vérin comporte un corps 66C fixé sous l'une des poutres longitudinales du bâti inférieur 54, une tige de commande 66T pouvant coulisser dans le corps 66C et ayant son extrémité libre reliée par pivot 68 à la fourche 60. A cet effet, une chape 66P est fixée sous le tube principal 60T via une plaque de support 60Q qui est par exemple soudée à ce tube en étant solidaire de contreforts 60R raccordés à une partie de la circonférence du tube.

Vers les leviers d'appui 60L, sensiblement au niveau de chaque quart de la longueur du tube principal 60T, ce dernier supporte des dispositifs 72 à mâchoires de plaquage de l'arrière du pavillon sur la traverse supérieure arrière 17 de la caisse. Chaque dispositif 72 à mâchoires est fixé sur une plaque de support 60Q, l'un de ces dispositifs 72 ayant sa plaque de support en commun avec la chape 66P associée à la tige de vérin de pivotement de la fourche. L'une des mâchoires est une mâchoire supérieure 72S qui est destinée à appuyer sur le bossage 13B du pavillon quand la fourche 60 vient en position active. Cette mâchoire supérieure 72S est fixe relativement à la fourche 60. L'autre des mâchoires est une mâchoire inférieure 72N qui est destinée, quand la fourche vient en position active, à venir en appui en dessous de la traverse 17, à la face inférieure du bossage 17B de piétement de charnière. Cette mâchoire inférieure 72N est mobile à ouverture et à fermeture relativement à la mâchoire supérieure 72S, par des moyens de serrage de type connus tels que par exemple des moyens de pivotement et des moyens d'actionnement pneumatiques. La mâchoire inférieure permet d'appliquer localement un effort de serrage.

Chaque dispositif 72 à mâchoires comprend par ailleurs des tampons frontaux 74 qui viennent appuyer sur le pavillon à la lisière 13LA de raccordement de son panneau principal 13H avec le rebord transversal 13V qui est vertical. Ces tampons frontaux 74 sont fixés sur des colonnettes 72C sensiblement radiales des dispositifs 72 à mâchoires, ces colonnettes assurant, outre le support à bras de levier de mâchoires, la même fonction de support que les leviers 60L aux extrémités du tube pour supporter les tampons correspondants. A l'avant du pavillon, des mâchoires 76 sont aussi présentes pour le serrage sur la traverse avant lors de l'opération de soudage électrique par points. Il s'agit de mâchoires classiques agissant comme des mors d'un étau.

La table de positionnement de pavillon permet un pré-positionnement de chaque pavillon avant sa préhension par le système 23 de pose et de conformation du pavillon. Cette table 29 comprend un châssis 129 positionné incliné en étant supporté par trois pieds 132 de hauteurs différentes. Dans l'exemple de réalisation considéré, le châssis 129 est sensiblement plan et étant de type en échelle avec des longerons et des traverses, supportant des plaques 129P de support d'organes destinés au glissement du pavillon pour son pré-positionnement contre des organes de butée qui sont configurés pour recevoir en appui deux lisières adjacentes du pavillon.

Une extrémité transversale basse du châssis 129, par exemple pour correspondre avec l'arrière du pavillon, supporte deux butées inférieures 134 déterminant une ligne basse d'appui. Ces deux butées inférieures 134 comportent des rouleaux de butée inférieure 134R qui sont sensiblement perpendiculaires au plan général du châssis. Ces rouleaux de butée inférieure 134R sont conformés pour venir en appui contre le raccordement du panneau principal 13H du pavillon et du rebord transversal vertical 13V du pavillon.

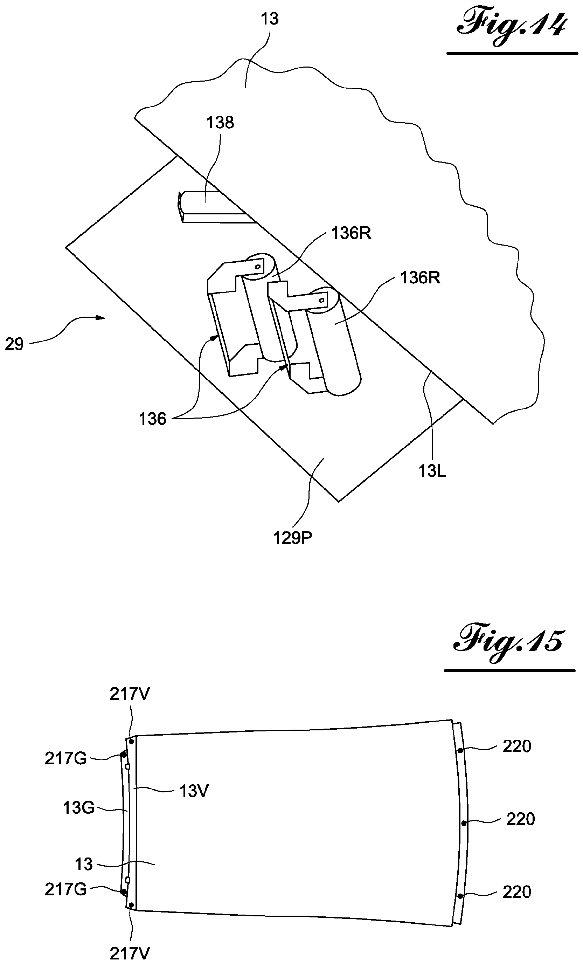

Par ailleurs, une extrémité longitudinale basse du châssis 129, pour correspondre avec un bord latéral 13L constituant une lisière du pavillon, supporte deux organes de butée latérale 136 à rouleaux de butée latérale 136R déterminant une ligne latérale d'appui. Ces rouleaux de butée latérale 136R sont sensiblement perpendiculaires au plan général du châssis. En partie basse du châssis, dans l'exemple représenté en particulier à la figure 14, il y a un doublement de rouleaux de butée latérale 136R, l'un seulement étant en utilisation et l'autre pouvant le remplacer après permutation.

Finalement, les rouleaux des organes de butée sont soutenus par des chapes localement dressées au-dessus du châssis, telles que des étriers dont la branche inférieure est reliée au châssis et la branche supérieure est libre vers le haut. Des pattes en col de cygne 134P permettent un dégagement de support des chapes des organes de butée inférieure pour loger avec jeu la goulotte arrière 13G du pavillon.

D'autres rouleaux 138 sont des rouleaux de support à plat qui sont supportés par les plaques 129P solidaires du châssis 129. Ces rouleaux de support à plat 138 sont disposés pour permettre un glissement du pavillon vers ses différents organes de butée tels que précédemment déterminés. Ces rouleaux de glissement 138 sont sensiblement parallèles au plan général du châssis. Dans l'exemple considéré, ils sont orientés avec leur axe de rotation sensiblement horizontal, parallèlement les uns des autres. Leur ligne supérieure de contact est agencée pour être sensiblement en correspondance du bombé général du pavillon, avec jeu éventuel ou suspension élastique éventuelle des axes desdits rouleaux de support à plat pour autoriser un débattement sensiblement vertical. En variante équivalente, les rouleaux de support à plat peuvent être remplacés par des billes le cas échéant montées sur des pieds à suspension verticale.

Le fonctionnement du poste 10 d'assemblage de pavillon ressort déjà en partie de la description qui précède et va maintenant être détaillé.

Les pavillons sont alimentés en étant empilés dans leur conteneur, à savoir le conteneur de pavillons tôlés 27T ou le conteneur de pavillons vitrés 27V. Ensuite, le robot 27R prend chaque pavillon pour son assemblage sur la caisse et le pose sur la table 29 de positionnement.

Le pavillon glisse alors sur les rouleaux de glissement à plat et sur les rouleaux de de butée pour venir se caler en particulier sur les butées inférieures. Il est ainsi pré-positionné de manière correcte pour être manipulé par le robot 53 associé au système 23 de pose et de conformation de pavillon.

Ensuite, ce robot 53 et ce système 23 viennent poser le pavillon sur la caisse avec centrage automatique latéralement et positionnement longitudinal respectivement par rapport aux brancards et aux traverses. Les dispositifs de liaison 51G autorisant un glissement limité pour le centrage automatique du pavillon entre les pentes correspondantes des brancards.

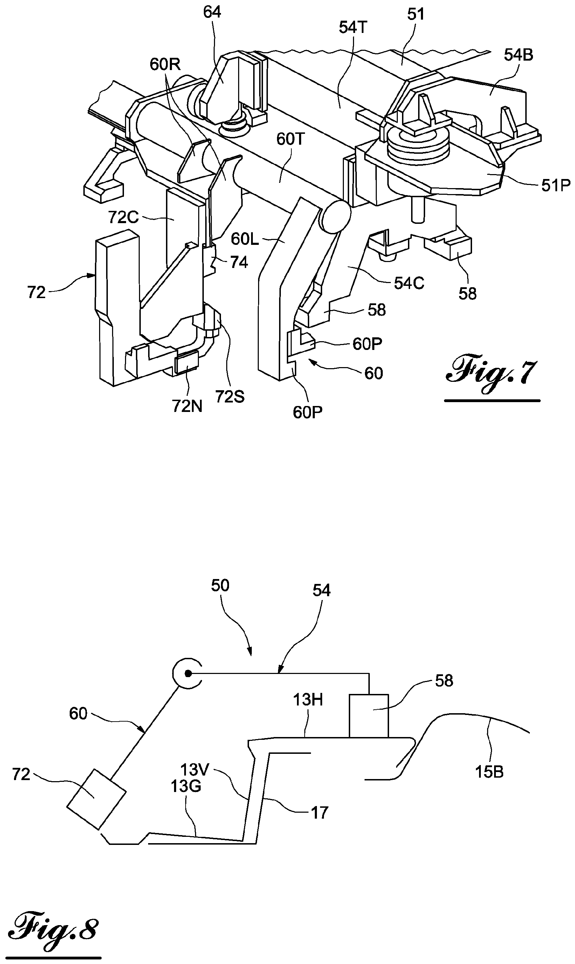

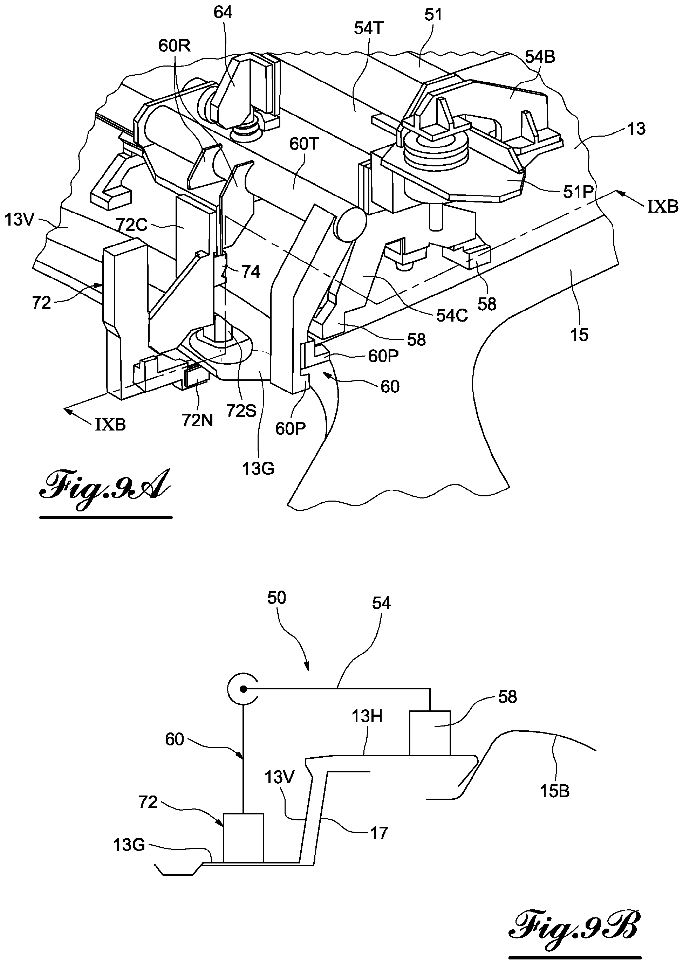

Le dispositif 50 de conformation de l'arrière du pavillon 13 passe alors de sa position inactive à sa position active par pivotement mis en oeuvre par le vérin du dispositif d'actionnement 66. Le pavillon est alors bien placé tant transversalement que longitudinalement. Le dispositif 50 de conformation plie légèrement l'arrière du pavillon 13 vers la traverse arrière 17 de la caisse, comme la figure 8 et la figure 9B permettent de l'appréhender. Chaque mâchoire inférieure 72N se rapproche de la mâchoire 72S correspondante pour assurer une force de serrage. La figure 9B ne montre pas la mâchoire inférieure. Le soudage électrique par points est effectué par le robot 25 de soudures par points.

Le dispositif 50 de conformation de l'arrière du pavillon 13 passe alors de sa position active à sa position inactive par desserrage des mâchoires puis par pivotement vers le haut mis en oeuvre par le vérin du dispositif d'actionnement 66. Les ventouses 56 sont alors désactivées pour libérer le système 23 de pose et de conformation de pavillon relativement au pavillon ayant son avant et son arrière qui ont été soudés aux traverses. La caisse 11 pourvue de son pavillon 13 soudé à l'avant et arrière est alors déplacée dans la cabine laser 33. Les robots 31 assurent alors les opérations de brasage par laser pour souder les bords longitudinaux du pavillon 13 au brancard correspondant.

Avantageusement, le poste 10 d'assemblage de pavillon selon l'invention est particulièrement efficace en comprenant au moins un conteneur de pavillon, la table de positionnement de pavillon 29, le système 23 de pose et de conformation de pavillon pour son soudage par points à l'avant et à l'arrière et enfin la cabine laser intervenant après lesdits soudages avant et arrière. Ce poste permet, grâce à la table 29, de simplifier les manipulations pour une préhension d'un pavillon par le système 23 mise en place de pavillon avec pose et conformation. La table 29 permet de disposer d'un pavillon dépilé avant pose sur le véhicule, en étape intermédiaire facilitant la préhension du pavillon à installer. Le robot 53 de manipulation du pavillon de la table 29 vers la caisse 11 via ledit système 23 est aisé et les repères sont directement assurés par le positionnement préliminaire du pavillon sur la table. De plus, la table est configurée en ayant son pourtour dégagé pour permettre un accès aisé lors de la préhension du pavillon, les seuls bords de la table étant ses organes de butée qui sont localisés et peu encombrants. Le pourtour de la table a des segments passant par les organes localisés de butée. De l'espace est en particulier dégagé pour laisser passer le dispositif à mâchoires. Par ailleurs, tant des pavillons vitrés que des pavillons tôlés peuvent être manipulés et assemblés du fait des choix de positionnement des ventouses et des tampons.

Comme il a déjà été expliqué, le robot de soudures par points 25 assure le soudage par points de l'arrière et de l'avant du pavillon relativement à la traverse arrière 17 et à la traverse avant qui relient le haut des côtés de caisse. Ces opérations de soudage électrique par points sont effectuées en station à l'entrée du poste 10 d'assemblage de pavillon, juste en amont de la cabine laser 33. Le dispositif 50 de conformation de l'arrière du pavillon 13 est en action en étant à sa position active lors des opérations de soudure par point de l'arrière du pavillon. La figure 15 illustre les emplacements des soudures, quand le pavillon est contre les côtés de caisse et les traverses. Dans l'exemple de réalisation considéré, quatre points arrière de soudure électrique sont mis en oeuvre pour fixer l'arrière du pavillon. Parmi ces quatre points, deux points référencés 217G à la figure 15 sont dédiés au soudage des extrémités des goulottes 13G à la traverse arrière. Parmi les quatre points arrière, deux points référencés 217V à la figure 15 sont dédiés au soudage des extrémités du rebord transversal 13V du pavillon à la traverse arrière. De plus, le robot 25 réalise trois points avant de soudure 220 entre l'avant du pavillon et la traverse avant, à savoir deux points latéraux et un point médian.

Le procédé d'assemblage d'un pavillon 13 sur le poste d'assemblage 10 est récapitulé ci-dessous, en complément du fonctionnement déjà décrit. En étape préliminaire à l'assemblage, les pavillons sont alimentés en étant empilés dans leur conteneur, sachant que deux conteneurs sont prévus dans l'exemple envisagé. Le procédé est le même pour chaque pavillon, quel que soit son conteneur de départ suivant que le pavillon soit tôlé ou avec un module vitré. Au début intervient une étape pendant laquelle le robot 27R de chargement de pavillon sur la table prend dans son conteneur le pavillon 13 à assembler sur la caisse et le pose tout d'abord sur la table 29 de positionnement.

Ensuite intervient une étape pendant laquelle le pavillon 13 déchargé par le robot de chargement 27R sur la table 29 glisse alors sur les rouleaux 138 servant d'organes de glissement à plat puis glisse sur les rouleaux latéraux 136R et/ou les rouleaux inférieurs 134R qui servent de toute façon au moins d'organes de butée pour arrêter le glissement du pavillon. A la fin du glissement, le pavillon 13 en appui sur la table 29 est pré-positionné de manière correcte.

Dans le procédé, intervient alors une étape pendant laquelle agit le robot 53 associé au système 23 de mise en place du pavillon en assurant sa pose sur la caisse et sa conformation. Pendant cette étape, le robot 53 fait venir le système 23 en approche du pavillon pré-positionné sur la table. Ce système 23 vient prendre le pavillon en s'y accrochant par les ventouses 56, avec un positionnement précis. Le système 23 déplacé par le robot 53 vient alors poser le pavillon sur le haut de la caisse avec centrage automatique latéralement et positionnement longitudinal respectivement par rapport aux pans inclinés en pentes convergentes des brancards (figure 2, figure 3, droite de la figure 8) et par rapport aux traverses (gauche de la figure 8). Les dispositifs de liaison 51G autorisent un glissement limité pour le centrage automatique du pavillon entre lesdites pentes.

Une étape de déformation à plaquage de l'arrière du pavillon intervient alors. Le dispositif 50 de conformation de l'arrière du pavillon 13 pivote vers le bas en passant de sa position inactive à sa position active. Le pavillon est alors bien placé tant transversalement que longitudinalement, sur le principe que la figure 9B permet de bien comprendre. Chaque mâchoire inférieure 72N se rapproche de la mâchoire 72S correspondante pour assurer une force de serrage.

Une étape de soudage électrique par points est effectuée à la station de soudage électrique par points par le robot 25 de soudures par points. Après le soudage électrique par points de l'arrière du pavillon, le dispositif 50 de conformation de l'arrière du pavillon 13 peut alors passer de sa position active à sa position inactive par desserrage des mâchoires puis par pivotement vers le haut.

Après le soudage électrique par points de l'arrière et de l'avant du pavillon, le système 23 est dégagé, les ventouses 56 étant désactivées pour libérer le système 23 de pose et de conformation de pavillon relativement au pavillon ayant son avant et son arrière qui ont été soudés aux traverses. La caisse 11 pourvu de son pavillon 13 est alors transférée depuis la station de soudage électrique par points jusque dans la cabine laser 33, par déplacement sur la ligne 21 de transport.

Une étape de soudage laser est alors effectuée dans la cabine laser 33. Pendant cette étape est effectué le soudage longitudinal du pavillon, par soudage laser des bords latéraux 13L sur les pans inclinés correspondants des brancards de côté de caisse. Les robots 31 dans la cabine 33 assurent alors les opérations de brasage par laser pour souder chaque bord longitudinal du pavillon au brancard correspondant.

Avantageusement pour la compacité du poste 10 d'assemblage de pavillon, la table 29 est à proximité de la station de soudage électrique par points. De plus, le système 23 de mise en place de pavillon est associé au robot 53 de manipulation pour que ce système puisse venir prélever ledit pavillon sur la table et que le pavillon soit amené par ledit robot de manipulation à ladite station qui est pourvue du robot 25 de soudures par points. La proximité correspond à celle découlant du débattement de travail de bras du robot de manipulation supportant le système de mise en place de pavillon. Le poste 10 d'assemblage de pavillon est compact en largeur mais aussi en longueur déterminée seulement par la longueur de la station de soudage électrique par points et la longueur de la cabine laser. Le robot de manipulation 53 est de type classique en ayant par exemple un socle tournant et des bras articulés pour des mouvements sur trois axes du pavillon entre la table 29 et la ligne 21 de transport de la caisse. Les autres robots du poste d'assemblage de pavillon sont aussi de type classique. L'agencement des conteneurs de pavillons relativement à la table, avec interposition du robot de chargement entre ces conteneurs et cette table, est aussi un paramètre de compacité du poste d'assemblage de pavillon.

Avantageusement, le selon l'invention est particulièrement efficace pour ce qui concerne la compacité de l'installation, la simplicité de l'outillage et sa fiabilité, en particulier la combinaison de la table de pré-positionnement et de l'outillage de soudures électriques par points avant la cabine laser. Par ailleurs, ce poste d'assemblage et son procédé de fonctionnement sont avantageux au regard du temps de cycle, du coût et de la maîtrise de la géométrie d'assemblage du véhicule.

## Revendications

1. Poste d'assemblage (10) dédié au montage d'un pavillon (13) en haut d'une caisse (11) de véhicule automobile comportant deux côtés de caisse (15) pourvus de brancards supérieurs (15B) reliés par au moins une traverse arrière (17), le poste d'assemblage (10) comportant une table (29) de positionnement de pavillon de manière que le pavillon (13) soit disponible pour être manipulé via un système (23) de mise en place du pavillon relativement aux brancards et à la traverse, en assurant la pose du pavillon sur la caisse et la conformation de l'arrière du pavillon, la table (29) étant à proximité d'une station de soudage électrique par points et ledit système (23) étant associé à un robot de manipulation (53) pour que ce système puisse venir prélever ledit pavillon (13) sur la table (29) et que le pavillon soit amené via le robot de manipulation (53) à ladite station qui d'une part est pourvue d'un robot (25) de soudures par points dédié au moins au soudage de l'arrière du pavillon (13) sur la traverse arrière (17) et qui d'autre part, sur une ligne (21) de transport de la caisse, est en amont d'une cabine (33) de soudage laser de bords latéraux (13L) du pavillon aux brancards.

2. Poste selon la revendication précédente, dans lequel le robot (25) de soudures par points est dédié aussi au soudage de l'avant du pavillon (13) sur une traverse avant reliant, comme la traverse arrière, les brancards supérieurs (15B) de la caisse.

3. Poste selon l'une quelconque des revendications précédentes, dans lequel le système (23) de mise en place du pavillon comprend un dispositif (50) de conformation de l'arrière du pavillon (13) pour le plaquer sur la traverse arrière (17) en vue de l'assemblage par soudage de l'arrière du pavillon sur la traverse arrière.

4. Poste selon la revendication précédente, dans lequel le dispositif (50) de conformation de l'arrière du pavillon (13) comprend un ensemble de conformation (60) qui pivote entre une position inactive et une position active à laquelle il est prévu que l'arrière du pavillon soit plaqué sur la traverse arrière.

5. Poste selon l'une quelconque des revendications précédentes, dans lequel la table (29) de positionnement pour le pavillon (13) comporte un châssis (129) globalement suivant un plan incliné et comprenant des organes (138) de glissement du pavillon de manière que le pavillon se cale par gravité en glissant jusqu'à venir en butée sur des organes de butée (134, 136) de la table, ces organes de butée (134, 136) étant configurés pour recevoir en appui deux lisières (13L, 13LA) adjacentes du pavillon

6. Poste selon la revendication précédente, dans lequel la table (29) a son pourtour qui est dégagé pour permettre un accès aisé lors de la préhension du pavillon (13) via le système (23) de mise en place du pavillon, le pourtour de la table ayant des segments passant par les organes de butée (134, 136) qui sont localisés.

7. Procédé d'assemblage d'un pavillon (13) sur le haut d'une caisse (11) de véhicule automobile, mis en oeuvre dans un poste d'assemblage (10) conforme à l'une quelconque des revendications précédentes, comprenant :
- une étape pendant laquelle le pavillon (13) à assembler sur la caisse (11) est déchargé sur la table (29) de positionnement ;
- une étape de mise en place du pavillon (13) sur la caisse (11) pendant laquelle agit le robot de manipulation (53) associé au système (23) de mise en place du pavillon en assurant sa pose sur la caisse et la conformation de l'arrière du pavillon ;
- une étape de soudage électrique par points de l'arrière du pavillon à sa traverse arrière du haut de la caisse est effectuée par le robot (25) de soudures par points puis intervient un dégagement dudit système (23) relativement à la caisse équipée de son pavillon ;
- une étape déplacement de la caisse (11) sur la ligne de transport (21), en transférant la caisse (11) pourvue de son pavillon (13) depuis la station de soudage électrique par points jusque dans la cabine (33) de soudage laser ;
- une étape de soudage longitudinal du pavillon(13), par soudage laser des bords latéraux (13L) du pavillon sur les brancards (15B) du haut de côté de caisse.

8. Procédé selon la revendication précédente, mis en oeuvre dans un poste d'assemblage (10) conforme à la revendication 2, dans lequel l'étape de soudage électrique par points de l'arrière du pavillon (13) est complétée par le soudage électrique par points de l'avant du pavillon à la traverse avant du haut de la caisse.

9. Procédé selon l'une quelconque des revendications 7 à 8, mis en oeuvre dans un poste d'assemblage (10) conforme à la revendication 3, dans lequel la conformation de l'arrière du pavillon (13) comprend la déformation à plaquage de l'arrière du pavillon sur la traverse arrière (17) en incluant, dans le système (23) de mise en place du pavillon, le pivotement vers le bas du dispositif (50) de conformation de l'arrière du pavillon en passant de sa position inactive à sa position active.

10. Procédé selon l'une quelconque des revendications 7 à 9, dans lequel pendant l'étape de mise en place du pavillon (13), le robot de manipulation (53) fait venir le système (23) en approche du pavillon pré-positionné sur la table, le système (23) déplacé par ledit robot (53) vient prendre le pavillon (13) puis vient poser le pavillon sur le haut de la caisse (11) avec centrage automatique latéralement et positionnement longitudinal respectivement par rapport aux brancards (15B) de haut de côté de caisse et par rapport à la traverse arrière (17) du haut de la caisse.

## Patentansprüche

1. Zusammenbaustation (10), die der Montage eines Daches (13) oben auf einer Karosserie (11) eines Kraftfahrzeugs gewidmet ist, zwei Karosserieseiten (15) umfassend, die mit oberen Dachrahmen (15B) versehen sind, die durch zumindest einen hinteren Querträger (17) verbunden sind, wobei die Zusammenbaustation (10) einen Tisch (29) zum Positionieren eines Daches umfasst, sodass das Dach (13) verfügbar ist, um durch ein System (23) zum Anbringen des Daches im Verhältnis zu den Dachrahmen und zum Querträger gehandhabt zu werden, zum Verlegen des Daches auf der Karosserie und zur Orientierung des hinteren Bereichs des Daches, wobei der Tisch (29) in der Nähe einer elektrischen Punktschweißstation ist, und das besagte System (23) einem Handhabungsroboter (53) zugeordnet ist, damit dieses System das besagte Dach (13) auf dem Tisch (29) abholen kann, und das Dach über den Handhabungsroboter (53) zur besagten Station gebracht wird, die einerseits mit einem Roboter (25) für Punktschweißungen versehen ist, der zumindest der Schweißung des hinteren Bereichs des Daches (13) auf dem hinteren Querträger (17) gewidmet ist, und die andererseits auf einer Linie (21) zur Beförderung der Karosserie vor einer Kabine (33) zum Laserschweißen der Seitenränder (13L) des Daches auf die Dachrahmen ist.

2. Station nach dem vorhergehenden Anspruch, wobei der Roboter (25) für Punktschweißungen auch zur Schweißung des vorderen Bereichs des Daches (13) auf einem vorderen Querträger gewidmet ist, der, wie der hintere Querträger, die oberen Dachrahmen (15B) der Karosserie verbindet.

3. Station nach einem der vorhergehenden Ansprüche, wobei das System (23) zum Anbringen des Daches eine Vorrichtung (50) zur Orientierung des hinteren Bereichs des Daches (13) umfasst, um es in Hinblick auf den Zusammenbau durch Schweißen des hinteren Bereichs des Daches auf dem hinteren Querträger am hinteren Querträger (17) anzudrücken.

4. Station nach dem vorhergehenden Anspruch, wobei die Vorrichtung (50) zur Orientierung des hinteren Bereichs des Daches (13) eine Orientierungseinheit (60) umfasst, die zwischen einer inaktiven Position und einer aktiven Position schwenkt, in der vorgesehen ist, dass der hintere Bereich des Daches am hinteren Querträger angedrückt wird.

5. Station nach einem der vorhergehenden Ansprüche, wobei der Tisch (29) zum Positionieren für das Dach (13) ein Gestell (129) im Allgemeinen entlang einer schiefen Ebene umfasst, und Organe (138) zum Verschieben des Daches derart umfassend, dass sich das Dach durch Schwerkraft zurechtsetzt, indem es bis auf Anschlag gegen die Anschlagorgane (134,136) des Tisches gleitet, wobei diese Anschlagorgane (134, 136) konfiguriert sind, um zwei angrenzende Kanten (13L, 13LA) des Daches unterstützend aufzunehmen.

6. Station nach dem vorhergehenden Anspruch, wobei der Tisch (29) seinen Umfang aufweist, der frei ist, um einen einfachen Zugang beim Greifen des Daches (13) durch das System (23) zum Anbringen des Daches zu erlauben, wobei der Umfang des Tisches Segmente aufweist, durch die Anschlagorgane (134,136) verlaufen, die lokalisiert sind.

7. Verfahren zum Zusammenbauen eines Daches (13) oben auf einer Karosserie (11) eines Kraftfahrzeugs, das in einer Zusammenbaustation (10) nach einem der vorhergehenden Ansprüche angewendet wird, umfassend:
- einen Schritt, bei dem das Dach (13), das auf der Karosserie (11) zusammenzubauen ist, auf dem Tisch (29) zum Positionieren abgeladen wird;
- einen Schritt zum Anbringen des Daches (13) auf der Karosserie (11), bei dem der Handhabungsroboter (53) gemeinsam mit dem System (23) zum Anbringen des Daches agiert, und für seine Verlegung auf der Karosserie und die Orientierung des hinteren Bereichs des Daches sorgt;
- einen Schritt zur elektrischen Punktschweißung des hinteren Bereichs des Daches auf seinem hinteren Querträger oben auf der Karosserie, der durch den Roboter (25) für Punktschweißungen durchgeführt wird, wonach eine Freigabe des besagten Systems (23) im Verhältnis zur Karosserie erfolgt, die mit ihrem Dach versehen ist;
- einen Schritt zum Verfahren der Karosserie (11) auf der Linie (21) zur Beförderung, indem die Karosserie (11), die mit ihrem Dach (13) versehen ist, von der elektrischen Punktschweißstation bis zur Kabine (33) zum Laserschweißen transferiert wird;
- einen Schritt zur Längsschweißung des Daches (13), durch Laserschweißen der Seitenränder (13L) des Daches auf die Dachrahmen (15B) oben seitlich auf der Karosserie.

8. Verfahren nach dem vorhergehenden Anspruch, das in einer Zusammenbaustation (10) nach Anspruch 2 angewendet wird, wobei der Schritt zur elektrischen Punktschweißung des hinteren Bereichs des Daches (13) durch die elektrische Punktschweißung der Vorderseite des Daches auf dem vorderen Querträger oben auf der Karosserie ergänzt wird.

9. Verfahren nach einem der Ansprüche 7 bis 8, das in einer Zusammenbaustation (10) nach Anspruch 3 angewendet wird, wobei die Orientierung des hinteren Bereichs des Daches (13) die Andrückverformung des hinteren Bereichs des Daches auf dem hinteren Querträger (17) umfasst, inklusive, im System (23) zum Anbringen des Daches, des Schwenks nach unten der Vorrichtung (50) zur Orientierung des hinteren Bereichs des Daches, durch den Übergangvon seiner inaktiven Position in seine aktive Position.

10. Verfahren nach einem der Ansprüche 7 bis 9, wobei der Handhabungsroboter (53) während des Schrittes zum Anbringen des Daches (13) das System (23) an das auf dem Tisch vorpositionierten Dach heranbringt, das System (23), das vom besagten Roboter (53) verfahren wird, das Dach (13) aufnimmt, und das Dach oben auf der Karosserie (11) mit der automatischen Zentrierung lateral und in Längsposition jeweils im Verhältnis zu den Dachrahmen (15B) oben seitlich auf der Karosserie und im Verhältnis zum hinteren Querträger (17) oben auf der Karosserie ablegt.

## Claims

1. Assembly station (10) intended for mounting a roof (13) on top of a motor vehicle body shell (11) comprising two body shell sides (15) provided with upper side rails (15B) connected by at least one rear cross member (17), with the assembly station (10) comprising a roof positioning table (29) in such a way that the roof (13) is available in order to be handled via a system (23) for placing the roof with respect to the side rails and the cross member, providing for the positioning of the roof on the body shell and the shaping of the rear of the roof, with the table (29) being in the vicinity of an electric spot-welding station and said system (23) being associated with a handling robot (53) so that this system can take said roof (13) on the table (29) and so that the roof is conveyed via the handling robot (53) to said station which on the one hand is provided with a spot-welding robot (25) intended at least for the welding of the rear of the roof (13) on the rear cross member (17) and on the other hand, on a shell transport line (21), is upstream from a cabin (33) for laser welding of side edges (13L) of the roof to the side rails.

2. Station according to the preceding claim, wherein the spot-welding robot (25) is also intended for the welding of the front of the roof (13) on a front cross member connecting, as the rear cross member, the upper side rails (15B) of the body shell.

3. Station according to any of the preceding claims, wherein the system (23) for placing the room comprises a device (50) for shaping the rear of the roof (13) in order to thrust it on the rear cross member (17) for the purpose of the assembly via welding of the rear of the roof on the rear cross member.

4. Station according to the preceding claim, wherein the device (50) for shaping the rear of the roof (13) comprises a shaping unit (60) that pivots between an inactive position and an active position in which it is provided that the rear of the roof is thrust on the rear cross member.

5. Station according to any of the preceding claims, wherein the table (29) for positioning the roof (13) comprises a framework (129) globally along an inclined plane and comprising members (138) for sliding the roof in such a way that the roof is wedged by gravity by sliding until it abuts against abutment members (134, 136) of the table, with these abutment members (134, 136) being configured to receive as a bearing two adjacent edges (13L, 13LA) of the roof.

6. Station according to the preceding claim, wherein the table (29) has its perimeter which is cleared in order to allow easy access during the handling of the roof (13) via the system (23) for placing the roof, with the perimeter of the table having segments passing through the abutment members (134,136) which are localised.

7. Method for assembling a roof (13) on the top of a motor vehicle body shell (11), implemented in an assembly station (10) in accordance with any of the preceding claims, comprising:
- a step during which the roof (13) to be assembled on the body shell (11) is unloaded onto the positioning table (29);
- a step of placing the roof (13) on the body shell (11) during which the handling robot (53) associated with the system (23) for placing the roof acts by providing for its positioning on the body shell and the shaping of the rear of the roof;
- a step of electric spot-welding the rear of the roof to its rear cross member of the top of the body shell is carried out by the spot-welding robot (25) then comes a clearing of said system (23) in relation to the body shell equipped with its roof;
- a step of displacing the body shell (11) on the transport line (21), by transferring the body shell (11) provided with its roof (13) from the electric spot-welding station to the cabin (33) for laser welding;
- a step of longitudinal welding of the roof (13), by laser welding of the side edges (13L) of the roof to the side rails (15B) of the top side of the body shell.

8. Method according to the preceding claim, implemented in a station for assembling (10) in accordance with claim 2, wherein the step of electric spot-welding the rear of the roof (13) is supplemented with the electric spot-welding of the front of the roof to the front cross member of the top of the body shell.

9. Method according to any of claims 7 to 8, implemented in a station for assembling (10) in accordance with claim 3, wherein the shaping of the rear of the roof (13) comprises the thrusting deformation of the rear of the roof on the rear cross member (17) by including, in the system (23) for placing the roof, the pivoting downwards of the device (50) for shaping the rear of the roof by passing from its inactive position to its active position.

10. Method according to any of claims 7 to 9, wherein during the step of placing the roof (13), the handling robot (53) brings the system (23) at the approach of the roof pre-positioned on the table, the system (23) displaced by said robot (53) takes the roof (13) then positions the roof on the top of the body shell (11) with automatic centring laterally and longitudinal positioning respectively with respect to the side rails (15B) at the top of the side of the body shell with respect to the rear cross member (17) of the top of the body shell.
